(19) 

**Europäisches Patentamt**
**European Patent Office**
**Office européen des brevets**

(11) **EP 4 050 856 A1**

(12) **EUROPÄISCHE PATENTANMELDUNG**

(43) Veröffentlichungstag:
**31.08.2022 Patentblatt 2022/35**

(21) Anmeldenummer: **21159342.1**

(22) Anmeldetag: **25.02.2021**

(51) Internationale Patentklassifikation (IPC):
**H04L 12/841** (2013.01)   **H04L 12/891** (2013.01)
**H04L 12/913** (2013.01)   **H04L 12/911** (2013.01)

(52) Gemeinsame Patentklassifikation (CPC):
**H04L 47/283; H04L 47/41; H04L 47/724;**
**H04L 47/828;** H04L 47/805

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Chen, Feng**
  **90537 Feucht (DE)**
• **Götz, Franz-Josef**
  **91180 Heideck (DE)**
• **Nguyen, An Ninh**
  **90427 Nürnberg (DE)**
• **Schmitt, Jürgen**
  **90768 Fürth (DE)**

(54) **VERFAHREN ZUR ÜBERTRAGUNG ZEITKRITISCHER DATEN INNERHALB EINES KOMMUNIKATIONSSYSTEMS UND KOMMUNIKATIONSGERÄT**

(57) Zur Übertragung zeitkritischer Daten innerhalb eines Kommunikationssystems werden ausgewählte Datagramme (300) Datenströmen zugeordnet und von ersten Kommunikationsgeräten (201-204) zu zweiten Kommunikationsgeräten (205) über dritte Kommunikationsgeräte (101-104) umfassende Pfade übertragen. An einem gemeinsamen zweiten Kommunikationsgerät (205) endende Datenströme werden entlang eines gemeinsamen Pfadabschnitts innerhalb einer Datenstrom-Gruppe aggregiert. Für jeden innerhalb der Datenstrom-Gruppe aggregierten Datenstrom wird eine minimale und eine maximale Latenz bei einer Übertragung vom jeweiligen ersten Kommunikationsgerät zum gemeinsamen zweiten Kommunikationsgerät ermittelt. Anhand einer für die Datenstrom-Gruppe minimal erforderlichen Übertragungsdauer entlang des gemeinsamen Pfads sowie anhand eines jeweiligen Jitters gibt das gemeinsame zweite Kommunikationsgerät jeweils Sendezeitpunkte (501-504) für die aggregierten Datenströme vor.

FIG 1

| | Bursts | MIN | MAX | Jitter |
|---|---|---|---|---|
| T1 | 2 | 15 | 250 | 235 |
| T2 | 1 | 15 | 250 | 235 |
| T3 | 1 | 20 | 200 | 180 |
| T4 | 2 | 15 | 150 | 135 |

EP 4 050 856 A1

**Beschreibung**

Die vorliegende Erfindung betrifft ein Verfahren zur Übertragung zeitkritischer Daten innerhalb eines Kommunikationssystems, insbesondere innerhalb eines Time-sensitive Networks, und ein zur Durchführung des Verfahrens geeignetes Kommunikationsgerät.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

Entsprechend EP 3 038 325 B1 werden zur Datenübermittlung in einem Kommunikationsnetz eines industriellen Automatisierungssystems erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste und zweite Teilintervall unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

Aus EP 3 674 824 A1 ist bekannt, dass für Datenströme, die auf Endgeräten ablaufenden ausgewählten Steuerungsanwendungen zugeordnet sind, jeweils ein individuelles Zeitfenster innerhalb vorgegebener Zeitintervalle spezifiziert wird. Die Zeitfenster weisen jeweils eine individuelle Zyklusdauer auf, die ein Vielfaches einer allgemeinen Zyklusdauer ist oder der allgemeinen Zyklusdauer entspricht. Erste bzw. zweite Kommunikationsgeräte überprüfen für die ausgewählten Steuerungsanwendungen jeweils, ob ein spezifiziertes Zeitfenster zur Datenübermittlung verfügbar ist. Bei einem verfügbaren Zeitfenster wird jeweils eine Information über einen Beginn des Zeitfensters innerhalb der vorgegebenen Zeitintervalle an das Endgerät übermittelt, auf dem die jeweilige ausgewählte Steuerungsanwendung abläuft. Datenströme, die ausgewählten Steuerungsanwendungen zugeordnet sind, werden jeweils entsprechend der Information über den Beginn des individuellen Zeitfensters übermittelt.

Durch Aggregation von Datenströmen in Time-sensitive Networks wird erreicht, dass eine Anzahl von Datenströmen mit zu erfüllenden Quality of Service Anforderungen nicht übermäßig groß wird und dass Bandbreiteanforderungen für Datenströme in einem angemessenen Verhältnis zu einer auf Übertragungsstecken (Links) jeweils verfügbaren Bandbreite stehen. Von diesen Parametern ist abhängig, wie effizient eine Reservierung von Systemressourcen in Netzkomponenten zur Übertragung von Datenströmen und entsprechende Reservierungsverfahren sind. Bei vielen Datenströmen mit geringen Bandbreiteanforderungen ist ein Nutzungsgrad der Systemressourcen ungünstig gering. Insbesondere kann dies bei einer hohen Anzahl an Reservierungsvorgängen schnell zu einem Engpass an Queuing Ressourcen führen, wodurch Reservierungsanfragen für neue Datenströme abgewiesen werden müssen.

Der vorliegenden Erfindung liegt daher die Aufgabe zugrunde, ein Verfahren zur Übertragung von Datenströmen mit zeitkritischen Daten zu schaffen, das eine effiziente Reservierung von Systemressourcen in Netzinfrastrukturgeräten für die Datenströme ermöglicht, sowie eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein Kommunikationsgerät mit den in Anspruch 15 angegebenen gelöst. Vorteilhafte Weiterbildungen sind in den abhängigen Ansprüchen angegeben.

Entsprechend dem erfindungsgemäßen Verfahren zur Übertragung zeitkritischer Daten innerhalb eines Kommunikationssystems werden ausgewählte Datagramme Datenströmen zugeordnet und von ersten Kommunikationsgeräten zu zweiten Kommunikationsgeräten über dritte Kommunikationsgeräte, insbesondere Switche oder Bridges, umfassende Pfade übertragen. An einem gemeinsamen zweiten Kommunikationsgerät endende Datenströme werden entlang eines gemeinsamen Pfadabschnitts innerhalb einer Datenstrom-Gruppe aggregiert. Für jeden innerhalb der Datenstrom-Gruppe aggregierten Datenstrom wird eine minimale und eine maximale Latenz bei einer Übertragung vom jeweiligen ersten Kommunikationsgerät zum gemeinsamen zweiten Kommunikationsgerät ermittelt.

Erfindungsgemäß ermittelt das gemeinsame zweite Kommunikationsgerät aus den minimalen und den maximalen Latenzen für die aggregierten Datenströme jeweils einen Jitter und gibt anhand einer für die Datenstrom-Gruppe minimal erforderlichen Übertragungsdauer entlang des gemeinsamen Pfads sowie anhand der Jitter jeweils Sendezeitpunkte für die aggregierten Datenströme vor. Dabei wird die minimal erforderliche Übertragungsdauer aus Übertragungsraten- und Datenmengenanforderungen der aggregierten Datenströme berechnet. Vorzugsweise werden bei der Übertragung der Datenstrom-Gruppe entlang des gemeinsamen Pfadabschnitts zwischen den aggregierten Datenströmen jeweils zumindest die ermittelten Jitter umfassende Sperrzeiten eingehalten.

Mit der vorliegenden Erfindung wird bei einer Reservierung von Systemressourcen in Netzinfrastrukturgeräten durch eine Bündelung von Datenströmen als Aggregaten in einer entlang eines gemeinsamen Pfadabschnitts einheitlich behandelten Datenstrom-Gruppe und durch ein koordiniertes Scheduling für die aggregierten Datenströme eine effizientere Ausnutzung der Systemressourcen erzielt. Dabei kann die vorliegende Erfindung grundsätzlich in Kombination mit beliebigen Traffic Shaping Verfahren auf Dataplane-Ebene genutzt werden. Darüber hinaus ist die vorliegende Erfindung sowohl mit verteilten bzw. dezentralen Stream-Reservierungsmodellen, wie RAP oder RSVP, als auch mit zentralen oder hybriden Stream-Reservierungsmodellen nutzbar.

Entsprechend einer bevorzugten Ausgestaltung der vorliegenden Erfindung wird für die Übertragung der Datenstrom-Gruppe entlang des gemeinsamen Pfadabschnitts ein Übertragungszyklus vorgegeben, der zumindest die minimal erforderliche Übertragungsdauer zuzüglich der ermittelten Jitter umfasst. Dabei wird für jeden aggregierten Datenstrom innerhalb des Übertragungszyklus ein jeweiliges Übertragungszeitfenster vorgegeben wird. Insbesondere werden durch die Übertragungszeitfenster jeweils Sendezeitpunkte für die aggregierten Datenströme an einem dritten Kommunikationsgerät vorgegeben, das als nächstes drittes Kommunikationsgerät mit dem gemeinsamen zweiten Kommunikationsgerät verbunden ist. Auf diese Weise sind klare Rahmenbedingungen für ein koordiniertes Scheduling in Bezug auf die aggregierten Datenströme definiert.

Vorteilhafterweise werden Sendezeitpunkte für die aggregierten Datenströme an den dritten Kommunikationsgeräten jeweils sukzessive durch einen Sendezeitpunkt an einem entlang des jeweiligen Pfads zum gemeinsamen zweiten Kommunikationsgeräts nachfolgenden dritten Kommunikationsgerät vorgegeben. Für eine Ermittlung eines Sendezeitpunkts an einem vorhergehenden dritten Kommunikationsgerät wird jeweils vom Sendezeitpunkt am nachfolgenden Kommunikationsgerät zumindest eine maximale Latenz entlang einer Übertragungsstecke zwischen dem vorhergehenden und dem nachfolgenden dritten Kommunikationsgerät abgezogen. Auf diese Weise wird für sämtliche dritten Kommunikationsgeräte innerhalb des Kommunikationssystems ein konsistentes Scheduling in Bezug auf die aggregierten Datenströme ausgerollt.

Die ausgewählten Datagramme werden von den ersten Kommunikationsgeräten über die dritten Kommunikationsgeräte zu den zweiten Kommunikationsgeräten vorzugsweise innerhalb vorgegebener periodischer Zeitintervalle übertragen. Dabei werden die vorgegebenen Zeitintervalle an allen Kommunikationsgeräten synchronisiert werden. Dies ermöglicht eine zuverlässige Umsetzung des koordinierten Scheduling für die aggregierten Datenströme in den dritten Kommunikationsgeräten.

Entsprechend einer besonders bevorzugten Ausgestaltung der vorliegenden Erfindung senden die ersten Kommunikationsgeräte zur Bekanntmachung abonnierbarer Datenströme jeweils einen Datenstrom-Identifikator umfassende erste Datagramme und spezifizieren in den ersten Datagrammen Dienstgüteparameter für den jeweiligen Datenstrom. Die zweiten Kommunikationsgeräte senden zur Reservierung von durch die dritten Kommunikationsgeräte für eine Übertragung der Datenströme bereitzustellenden Ressourcen jeweils zweite Datagramme und spezifizieren in diesen den jeweiligen Datenstrom-Identifikator. Die ersten Datagramme sind beispielsweise Talker Advertise oder Talker Announce Nachrichten, während die zweiten Datagramme Listener Ready, Listener Join oder Listener Attach Nachrichten sein können. Die minimalen und die maximalen Latenzen bei der

Übertragung vom jeweiligen ersten Kommunikationsgerät zum gemeinsamen zweiten Kommunikationsgerät werden vorteilhafterweise anhand von Laufzeiten der ersten bzw. zweiten Datagramme ermittelt.

Die dritten Kommunikationsgeräte reservieren auf die ersten und zweiten Datagramme jeweils bei ausreichender Verfügbarkeit vorzugsweise Ressourcen zur Übertragung der Datenströme über den jeweiligen Pfad. Die durch die dritten Kommunikationsgeräte bereitzustellenden Ressourcen umfassen insbesondere nutzbare Übertragungszeitfenster, Übertragungsrate, Datenmenge, zugesicherte maximale Latenz, Queue-Anzahl, Queue-Cache bzw. Adress-Cache in Switchen oder Bridges.

Entsprechend einer weiteren vorteilhaften Ausgestaltung der vorliegenden Erfindung spezifiziert das gemeinsame zweite Kommunikationsgerät in den zweiten Datagrammen, beispielsweise mittels einer SCHEDULESPEC-Angabe, jeweils die Sendezeitpunkte für die aggregierten Datenströme an zumindest einem dritten Kommunikationsgerät, das als nächstes drittes Kommunikationsgerät mit gemeinsamen zweiten Kommunikationsgerät verbunden ist. Vorzugsweise werden die zweiten Datagramme des gemeinsamen zweiten Kommunikationsgeräts über die dritten Kommunikationsgeräte entlang der jeweiligen Pfade zu den ersten Kommunikationsgeräten weitergeleitet. Dabei wird in den weitergeleiteten zweiten Datagrammen des gemeinsamen zweiten Kommunikationsgeräts jeweils ein Sendezeitpunkt an einem entlang des jeweiligen Pfads zum gemeinsamen zweiten Kommunikationsgerät vorangehenden dritten Kommunikationsgerät oder ein Sendezeitpunkt am jeweiligen ersten Kommunikationsgerät spezifiziert, insbesondere mittels der SPEDULESPEC-Angabe. Somit wird für das koordinierte Scheduling auf bestehende Konzepte zur Stream-Reservierung zurückgegriffen, was die Implementierung der vorliegenden Erfindung erleichtert.

Die dritten Kommunikationsgeräte sind vorzugsweise innerhalb eines Time-sensitive Network, insbesondere entsprechend IEEE802.3-2018, IEEE 802.1Q-2018, IEEE 802.1AB-2016, IEEE 802.1AS-2011, IEEE 802.1BA-2011 und/oder IEEE 802.1CB-2017, miteinander verbunden. Insbesondere kann eine Weiterleitung der von den Datenströmen umfassten Datagramme mittels Frame Preemption, insbesondere gemäß IEEE 802.1Q-2018, Time-Aware Shaper, insbesondere gemäß IEEE 802.1Q-2018, Credit-Based Shaper, insbesondere gemäß IEEE 802.1Q-2018, Burst Limiting Shaper, Peristaltic Shaper und/oder Priority-Based Shaper gesteuert werden.

Das erfindungsgemäße Kommunikationsgerät zur Übertragung zeitkritischer Daten innerhalb eines Kommunikationssystems ist insbesondere zur Durchführung eines Verfahrens entsprechend vorangehenden Ausführungen vorgesehen sowie dafür ausgestaltet, insbesondere durch strukturelle Merkmale, und eingerichtet, insbesondere durch funktionelle Merkmale bzw. durch Konfiguration, am Kommunikationsgerät endende Datenströme entlang eines gemeinsamen Pfadabschnitts innerhalb einer Datenstrom-Gruppe zu aggregieren. Außerdem ist das Kommunikationsgerät dafür ausgestaltet und eingerichtet, für jeden innerhalb der Datenstrom-Gruppe aggregiert Datenstrom eine minimale und eine maximale Latenz bei einer Übertragung von einem jeweiligen Quell-Kommunikationsgerät zum Kommunikationsgerät zu ermitteln.

Darüber hinaus ist das erfindungsgemäße Kommunikationsgerät dafür ausgestaltet und eingerichtet, aus den minimalen und den maximalen Latenzen für die aggregierten Datenströme jeweils einen Jitter zu ermitteln und anhand einer für die Datenstrom-Gruppe minimal erforderlichen Übertragungsdauer entlang des gemeinsamen Pfads sowie anhand der Jitter jeweils Sendezeitpunkte für die aggregierten Datenströme vorzugeben. Dabei ist die minimal erforderliche Übertragungsdauer aus Übertragungsraten- und Datenmengenanforderungen der aggregierten Datenströme berechnet.

Die vorliegende Erfindung wird nachfolgend an einem Ausführungsbeispiel anhand der Zeichnung näher erläutert. Es zeigt

Figur 1    ein mehrere Kommunikationsgeräte umfassendes Kommunikationsnetz für ein industrielles Automatisierungssystem,

Figur 2    eine Darstellung einer Planung von Sendezeitpunkten für aggregierte Datenströme innerhalb des Kommunikationsnetzes gemäß Figur 1.

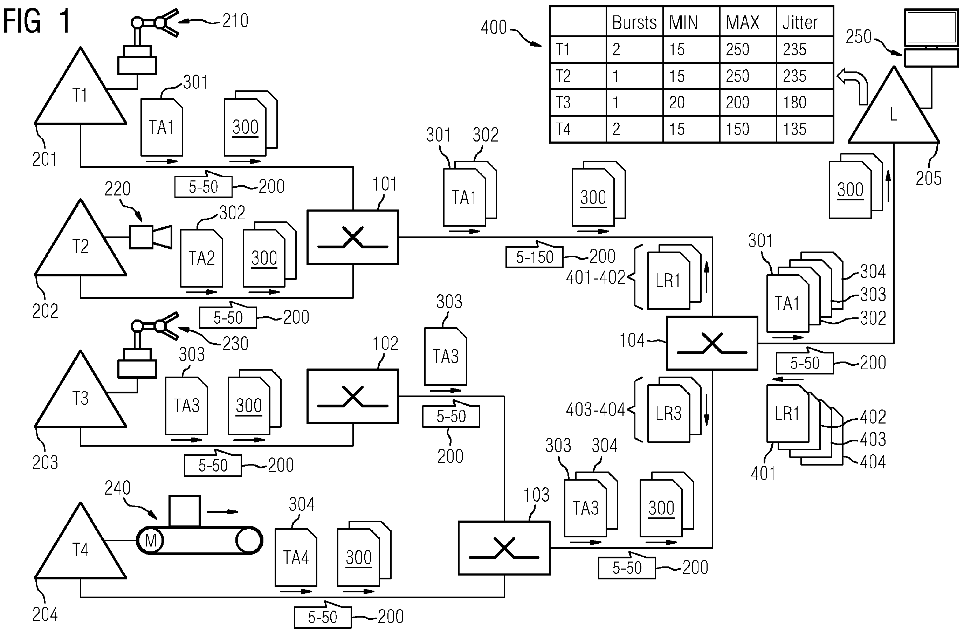

Das in Figur 1 dargestellte Kommunikationsnetz für ein industrielles Automatisierungssystem umfasst mehrere Bridges oder Switche 101-104 als Datagramme weiterleitende Kommunikationsgeräte. Bridges bzw. Switche 101-104 umfassen jeweils mehrere Ports sowie einen Backplane-Switch als Koppelelement und dienen insbesondere zum Anschluss von speicherprogrammierbaren Steuerungen 201-204, Bedien- und Beobachtungsstationen 205, I/O-Controllern oder I/O-Modulen, die ebenfalls Kommunikationsgeräte bzw. Kommunikationsendgeräte darstellen.

Im vorliegenden Ausführungsbeispiel ist das Kommunikationsnetz als Time-Sensitive Network ausgestaltet, insbesondere entsprechend IEEE 802.1Q, IEEE 802.1AB, IEEE 802.1AS, IEEE 802.1BA bzw. IEEE 802.1CB. Eine Weiterleitung von Datenrahmen (Frames) im Kommunikationsnetz kann vorteilhafterweise mittels Frame Preemption, insbesondere gemäß IEEE 802.1Qbu, Time-Aware Shaper, insbesondere gemäß IEEE 802.1Qbv, Credit-Based Shaper, insbesondere gemäß IEEE 802.1Qav, Burst Limiting Shaper, Peristaltic Shaper bzw. Priority-Based Shaper gesteuert werden. Darüber hinaus sind vorzugsweise für jeden Port eines sendenden bzw. weiterleitenden Kommunikationsgeräts 101-104, 201-205 mehrere Sendewarteschlangen (Queues) vorgesehen.

Speicherprogrammierbare Steuerungen 201-204 umfassen typischerweise jeweils ein Kommunikationsmodul, eine Zentraleinheit sowie zumindest eine Eingabe/Ausgabe-Einheit dar. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung 201-204 mit einem Switch oder Router oder zusätzlich mit einem Feldbus verbunden werden. Die Eingabe/Ausgabe-Einheit dient einem Austausch von Steuerungs- und Messgrößen zwischen einer speicherprogrammierbaren Steuerung 201-204 und einer durch eine speicherprogrammierbare Steuerung 201-204 gesteuerten Maschine oder Vorrichtung 210, 220, 230, 240. Die Zentraleinheit ist insbesondere für eine Ermittlung geeigneter Steuerungsgrößen aus erfassten Messgrößen vorgesehen. Obige Komponenten einer speicherprogrammierbaren Steuerung 201-204 sind beispielsweise über ein Rückwandbus-System miteinander verbunden.

Auch I/O-Module können zum Austausch von Steuerungs- und Messgrößen mit angeschlossenen Maschinen oder Vorrichtungen genutzt werden. Zur Steuerung von I/O-Modulen kann pro Automatisierungszelle ein zugeordneter I/O-Controller vorgesehen sein. I/O-Module können grundsätzlich auch durch eine entfernte speicherprogrammierbare Steuerung angesteuert werden.

Eine Bedien- und Beobachtungsstation 205 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 205 zur Anzeige von Werten eines Regelungskreises und zur Veränderung von Regelungsparametern verwendet. Eine Bedien- und Beobachtungsstation 205 umfasst zumindest eine graphische Benutzerschnittstelle 250, der ein Eingabegerät zugeordnet ist, eine Prozessoreinheit und ein Kommunikationsmodul.

Zur Übertragung zeitkritischer Daten werden ausgewählte Datenrahmen (Frames) 300 Datenströmen (Streams) zugeordnet und von ersten Kommunikationsgeräten 201-204 zu zweiten Kommunikationsgeräten 205 über dritte Kommunikationsgeräte 101-104 umfassende Pfade übertragen werden. Vorzugsweise werden die ausgewählten Datagramme 300 von den ersten Kommunikationsgeräten 201-204 über die dritten Kommunikationsgeräte 101-104 zu den zweiten Kommunikationsgeräten 205 innerhalb vorgegebener periodischer Zeitintervalle übertragen, die an allen Kommunikationsgeräten 101-104, 201-205 synchronisiert werden.

Im vorliegenden Ausführungsbeispiel stellen die speicherprogrammierbaren Steuerungen 201-204 erste Kommunikationsgeräte, die Bedien- und Beobachtungsstation 205 ein zweites Kommunikationsgerät und die Switche 101-104 dritte Kommunikationsgeräte dar. Dabei ist den speicherprogrammierbaren Steuerungen 201-204 jeweils eine Talker-Funktion zugeordnet, während der Bedien- und Beobachtungsstation 205 eine Listener-Funktion zugeordnet ist. Die vorliegende Erfindung ist nicht darauf eingeschränkt, welche Art von Kommunikations- oder Automatisierungsgerät eine Quelle bzw. eine Senke eines Datenstroms darstellt. Beispielsweise ist durchaus eine Bedien- und Beobachtungsstation als Quelle eines Datenstroms möglich, während eine speicherprogrammierbare Steuerung grundsätzlich auch eine Senke eines Datenstroms sein kann.

Zur Bekanntmachung abonnierbarer Datenströme senden die speicherprogrammierbaren Steuerungen 201-204 jeweils einen Datenstrom-Identifikator umfassende Talker Advertise oder Talker Announce Nachrichten 301-304 und spezifizieren in diesen Dienstgüteparameter für den jeweiligen Datenstrom. Die Dienstgüteparameter können insbesondere jeweils maximale Latenzen für die Datenströme umfassen.

Demgegenüber sendet die Bedien- und Beobachtungsstation 205 zur Reservierung von insbesondere durch die Switche 101-104 für die Übertragung der Datenströme bereitzustellenden Ressourcen jeweils Listener Ready, Listener Join oder Listener Attach Nachrichten 401-404 und spezifiziert in diesen den jeweiligen Datenstrom-Identifikator. Vorzugsweise werden Reservierungsanfragen entsprechend IEEE 802.1Qcc behandelt. Insbesondere wird bei ausreichenden Ressourcen jeweils eine dem spezifizierten Datenstrom-Identifikator zugeordnete Multicast-Adresse an ein anfragendes Kommunikationsendgerät oder an einen mit diesem direkt oder mittelbar verbundenen Switch übertragen. Vorzugsweise werden die Datenströme auf erfolgreiche Reservierungsanfragen jeweils bidirektional eingerichtet. Falls keine ausreichenden Ressourcen in den Switchen 101-104 zur Verfügung stehen, erfolgt eine Abweisung der jeweiligen Reservierungsanfrage.

Im vorliegenden Ausführungsbeispiel werden die Talker Advertise-Nachrichten 301-304 sukzessive über die Switche 101-104 an die Bedien- und Beobachtungsstation 205 übertragen. Die Listener Ready-Nachrichten 401-404 werden dementsprechend in umgekehrter Richtung sukzessive über die Switche 101-104 zur jeweiligen speicherprogrammierbaren Steuerung 201-204 übertragen. Die Switche 101-104 reservieren auf die die Talker Advertise-Nachrichten 301-304 und die Listener Ready-Nachrichten 401-404 jeweils bei ausreichender Verfügbarkeit Ressourcen zur Übertragung der Datenströme über den jeweiligen Pfad. Insbesondere überprüfen die Switche 101-104 bei einer Reservierungsanfrage jeweils, ob im Switch 101-104 ausreichende Ressourcen zur Datenübertragung unter Einhaltung der spezifizierten Dienstgüteparameter verfügbar sind. Die durch die Kommunikationsgeräte bereitzustellenden Ressourcen umfassen beispielsweise nutzbare Übertragungszeitfenster, Übertragungsrate, zugesicherte maximale Latenz, Queue-Anzahl, Queue-Cache bzw. Adress-Cache in Switchen oder Bridges.

Entsprechend der vorliegenden Erfindung werden an einem gemeinsamen zweiten Kommunikationsgerät endende Datenströme entlang eines gemeinsamen Pfadabschnitts innerhalb einer Datenstrom-Gruppe aggregiert. So werden beispielsweise sämtliche von den speicherprogrammierbaren Steuerungen 201-204 ausgehenden Datenströme zwischen dem Switch 104 und der Bedien- und Beobachtungstation 205 in einer Datenstrom-Gruppe aggregiert. Analog dazu werden vorteilhafterweise auch die von den speicherprogrammierbaren Steuerungen 101-102 ausgehenden Datenströme zwischen dem Switch 101 und dem Switch 104 in einer Datenstrom-Gruppe aggregiert. In entsprechender Weise können auch die die von den speicherprogrammierbaren Steuerungen 103-104 ausgehenden Datenströme zwischen dem Switch 103 und dem Switch 104 in einer Datenstrom-Gruppe aggregiert werden.

Für jeden innerhalb der Datenstrom-Gruppe aggregierten Datenstrom wird eine minimale und eine maximale Latenz bei einer Übertragung vom jeweiligen ersten Kommunikationsgerät zum gemeinsamen zweiten Kommunikationsgerät ermittelt, und auf Basis eines Latenzbereichs 200 zwischen minimaler und maximaler Latenz pro Übertragungsstrecke bzw. Link zwischen zwei Netzknoten. Im vorliegenden Ausführungsbeispiel wird mit Ausnahme der Übertragungsstrecke zwischen dem Switch 101 und dem Switch 104 jeweils von einer Latenz zwischen 5μs und 50μs ausgegangen; für die Übertragungsstrecke zwischen dem Switch 101 und dem Switch 104 wird eine Latenz zwischen 5μs und 150μs angenommen. Die minimalen und die maximalen Latenzen bei der Übertragung vom jeweiligen ersten Kommunikationsgerät zum gemeinsamen zweiten Kommunikationsgerät können beispielsweise anhand von Laufzeiten der Talker Advertise-Nachrichten 301-304 bzw. der Listener Ready-Nachrichten 401-404 ermittelt werden.

Das gemeinsame zweite Kommunikationsgerät, im vorliegenden Ausführungsbeispiel die Bedien- und Beobachtungsstation 205, ermittelt aus den minimalen und den maximalen Latenzen für die aggregierten Datenströme jeweils einen Jitter und erstellt vorzugsweise eine Zusammenstellung 400 über minimale und Latenzen 200 sowie Jitter pro Talker T1-T4 bzw. pro speicherprogrammierbarer Steuerung 201-204 als Quelle eines Datenstroms. In dieser Zusammenstellung 400 wird vorteilhafterweise außerdem erfasst, wie viele Bursts ein Datenstrom jeweils pro Übertragungszyklus umfasst. Im vorliegenden Ausführungsbeispiel umfassen die von den Talkern T1 und T4 bzw. von den speicherprogrammierbaren Steuerungen 201 und 204 ausgehenden Datenströme jeweils 2 Bursts, während die die von den Talkern T2 und T3 bzw. von den speicherprogrammierbaren Steuerungen 202 und 203 ausgehenden Datenströme jeweils nur 1 Burst aufweisen.

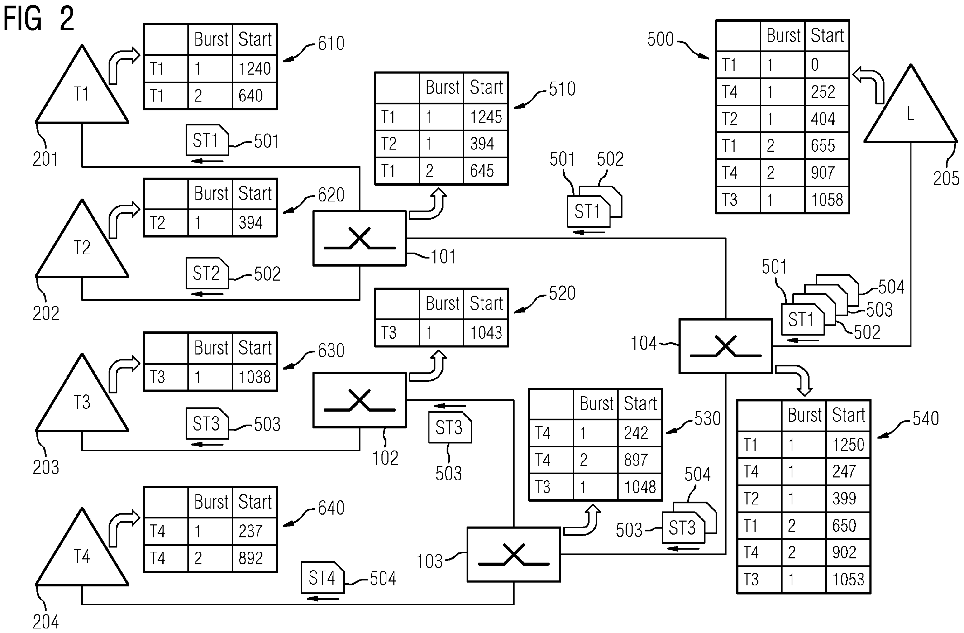

Anhand einer für die jeweilige Datenstrom-Gruppe minimal erforderlichen Übertragungsdauer entlang des gemeinsamen Pfads sowie anhand der Jitter gibt das jeweilige zweite Kommunikationsgeräte jeweils Sendezeitpunkte für die aggregierten Datenströme vor. Dabei wird die minimal erforderliche Übertragungsdauer aus Übertragungsraten- und Datenmengenanforderungen der aggregierten Datenströme berechnet. Entsprechend Figur 2 berechnet die Bedien- und Beobachtungsstation 205 als Listener L einen Zeitplan 540 für Sendezeitpunkte an einem Datenstrom-aufwärts nächsten Netzknoten, nämlich am Switch 104, für die von den Talkern T1-T4 ausgehenden Datenströme und übermittelt entsprechende Sendezeitinformationen 501-504 an den Switch 104. Ausgangspunkt für eine Berechnung des Zeitplans 540 für den Switch 104 ist ein Zeitplan 500 für Empfangszeitpunkte der von den Talkern T1-T4 ausgehenden Datenströme am Listener L.

Allgemein wird für die Übertragung einer Datenstrom-Gruppe entlang eines gemeinsamen Pfadabschnitts ein Übertragungszyklus vorgegeben, der zumindest die minimal erforderliche Übertragungsdauer zuzüglich der ermittelten Jitter umfasst. Innerhalb dieses Übertragungszyklus wird für jeden aggregierten Datenstrom ein jeweiliges Übertragungszeitfenster vorgegeben. Durch die Übertragungszeitfenster werden insbesondere jeweils Sendezeitpunkte für die aggregierten Datenströme an einem dritten Kommunikationsgerät vorgegeben werden, das als nächstes drittes Kommunikationsgerät mit gemeinsamen zweiten Kommunikationsgerät verbunden ist.

Die minimal erforderliche Übertragungsdauer sollte so groß angenommen werden, dass alle Bursts der aggregierten Datenströme innerhalb einer an einem Link zum jeweiligem Listener zur Verfügung stehenden Bandbreite empfangen werden können. Grundsätzlich kann die minimal erforderliche Übertragungsdauer auch größer gewählt werden, um beispielsweise eine gleichmäßigere Verteilung für die aggregierten Datenströme zu erzielen.

Eine Dauer C des Übertragungszyklus für eine Datenstrom-Gruppe lässt sich wie folgt ermitteln:

$$C = R + \sum_{i=1}^{N} b_i * J_i,$$

mit

- R als minimal erforderlicher Übertragungsdauer,
- i als Index eines aggregierten Datenstroms,
- $b_i$ als Anzahl der Bursts eines aggregierten Datenstroms und
- $J_i$ als ermittelter Jitter eines aggregierten Datenstroms.

Im vorliegenden Ausführungsbeispiel wird davon ausgegangen, dass die minimal erforderliche Übertragungsdauer R für die von den Talkern T1-T4 ausgehenden Datenströme 100 μs beträgt. Mit den in der Zusammenstellung 400 für die Talker T1-T4 erfassten Bursts und Jitter ergibt sich folgende Dauer C des Übertragungszyklus:

$$C = 100\,\mu s + 2 * 235\,\mu s + 1 * 235\mu s + 1 * 180\,\mu s + 2 * 135\,\mu s = 1255\,\mu s.$$

Darüber hinaus werden bei der Übertragung der Datenstrom-Gruppe entlang des gemeinsamen Pfadabschnitts zwischen den aggregierten Datenströmen vorzugsweise jeweils zumindest die ermittelten Jitter $J_i$ umfassende Sperrzeiten $D_k$ eingehalten. Somit gilt

$$D_k = \sum_{m=1}^{k-1} J_i,$$

mit

- m als Index eines Bursts eines aggregierten Datenstroms.

Mit einer für die jeweiligen Bursts der aggregierten Datenströme vorgegebenen initialen Position $P_{INIT}$ innerhalb R der minimal erforderlichen Übertragungsdauer R ergibt sich der Zeitplan 500 für die Empfangszeitpunkte $T_{RX}$ der von den Talkern T1-T4 ausgehenden Datenströme am Listener L entsprechend nachstehender Tabelle.

|  | $P_{INIT}$ | $J_i$ | $D_k$ | $T_{RX}$ |
|---|---|---|---|---|
| T1, Burst 1 | 0 μs | 235 μs | 0 μs | 0 μs |
| T4, Burst 1 | 17 μs | 135 μs | 235 μs | 252 μs |
| T2, Burst 1 | 34 μs | 235 μs | 370 μs | 404 μs |
| T1, Burst 2 | 50 μs | 235 μs | 605 μs | 655 μs |
| T4, Burst 2 | 67 μs | 135 μs | 840 μs | 907 μs |
| T3, Burst 1 | 83 μs | 180 μs | 975 μs | 1058 μs |

Ausgehend vom Zeitplan 500 für die Empfangszeitpunkte $T_{RX}$ der von den Talkern T1-T4 ausgehenden Datenströme am Listener L wird ein Zeitplan 540 für die Sendezeitpunkte am Switch 104 vorgegeben, der als nächster Switch mit dem Listener L verbunden ist. Nachfolgend können bei dem Sendezeitpunkte für die aggregierten Datenströme an den dritten Kommunikationsgeräten bzw. Switche 101-103 jeweils sukzessive durch einen Sendezeitpunkt an einem entlang des jeweiligen Pfads zum gemeinsamen zweiten Kommunikationsgeräts bzw. zum Listener L nachfolgenden dritten Kommunikationsgerät bzw. Switch 103-104 vorgegeben werden.

Für eine Ermittlung eines Sendezeitpunkts an einem vorhergehenden dritten Kommunikationsgerät bzw. Switch 101-103 wird vorzugsweise jeweils vom Sendezeitpunkt am nachfolgenden Kommunikationsgerät bzw. Switch 103-104 zumindest eine maximale Latenz entlang einer Übertragungsstecke zwischen dem vorhergehenden und dem nachfolgenden dritten Kommunikationsgerät bzw. Switch abgezogen. Dementsprechend werden die Sendezeitinformationen 501-504 sukzessive von Switch zu Switch Datenstrom-aufwärts übermittelt, so dass an jedem Switch 101-104 jeweils ein Zeitplan 510-540 für die Sendezeitpunkte vorliegt. In entsprechender Weise werden auch den Talkern T1-T4 ihre jeweiligen Zeitpläne 610-640 für die Sendezeitpunkte mitgeteilt.

Die von den Zeitplänen 510-540 in den Switchen 101-104 bzw. von den Zeitpläne 610-640 in den Talkern T1-T4 umfassten Sendezeitpunkte $S_i^H$ werden je Hop entsprechend folgender Operation berechnet:

$$S_i^{H-1} = (S_i^H - L_{MIN}^{H-1}) \bmod C,$$

mit

- H als Index eines Hops entlang eines Pfads für einen aggregierten Datenstrom und
- $L_{MIN}^H$ als minimaler Latenz auf einer Übertragungsstrecke zwischen Hop H und Hop H+1.

Vorzugsweise spezifiziert das gemeinsame zweite Kommunikationsgerät bzw. der Listener L in den Listener Ready-Nachrichten 401-404, insbesondere mittels einer SCHEDULESPEC-Angabe, jeweils die Sendezeitpunkte für die aggregierten Datenströme an zumindest einem dritten Kommunikationsgerät bzw. Switch 104, das bzw. der als nächstes drittes Kommunikationsgerät bzw. Switch mit dem Listener L verbunden ist. Die Listener Ready-Nachrichten 401-404 werden über die jeweiligen Switche 101-104 entlang der Pfade für die aggregierten Datenströme zu den Talkern T1-T4 weitergeleitet. In den weitergeleiteten Listener Ready-Nachrichten 401-404 kann somit jeweils ein Sendezeitpunkt an einem entlang des jeweiligen Pfads zum Listener L vorangehenden Switch 101-103 oder ein Sendezeitpunkt am jeweiligen Talker T1-T4 spezifiziert werden.

Minimale Abstände der Bursts der aggregierten Datenströme beim Empfang am Listener L entsprechen der für die jeweiligen Bursts vorgegebenen initialen Position $P_{INIT}$. Somit sind durch vorangehend beschriebenes Verfahren keinerlei Performance-Einbußen zu erwarten. Zusätzliche Mindestabstände zwischen einzelnen Zyklen der aggregierten Datenströme sind Jitterbedingt und werden eingefügt, um eine garantierte Quality of Service für die aggregierten Datenströme zu gewährleisten und um eine Überlast im Kommunikationsnetz zu verhindern.

**Patentansprüche**

1. Verfahren zur Übertragung zeitkritischer Daten innerhalb eines Kommunikationssystems, bei dem

    - ausgewählte Datagramme (300) Datenströmen zugeordnet und von ersten Kommunikationsgeräten (201-204) zu zweiten Kommunikationsgeräten (205) über dritte Kommunikationsgeräte (101-104) umfassende Pfade übertragen werden,
    - an einem gemeinsamen zweiten Kommunikationsgerät (205) endende Datenströme entlang eines gemeinsamen Pfadabschnitts innerhalb einer Datenstrom-Gruppe aggregiert werden,
    - für jeden innerhalb der Datenstrom-Gruppe aggregierten Datenstrom eine minimale und eine maximale Latenz bei einer Übertragung vom jeweiligen ersten Kommunikationsgerät zum gemeinsamen zweiten Kommunikationsgerät ermittelt wird,
    - das gemeinsame zweite Kommunikationsgerät aus den minimalen und den maximalen Latenzen für die aggregierten Datenströme jeweils einen Jitter ermittelt und
    - anhand einer für die Datenstrom-Gruppe minimal erforderlichen Übertragungsdauer entlang des gemeinsamen Pfads sowie anhand der Jitter jeweils Sendezeitpunkte (501-504) für die aggregierten Datenströme vorgibt, wobei die minimal erforderliche Übertragungsdauer aus Übertragungsraten- und Datenmengenanforderungen der aggregierten Datenströme berechnet wird.

2. Verfahren nach Anspruch 1,
   bei dem bei der Übertragung der Datenstrom-Gruppe entlang des gemeinsamen Pfadabschnitts zwischen den aggregierten Datenströmen jeweils zumindest die ermittelten Jitter umfassende Sperrzeiten eingehalten werden.

3. Verfahren nach einem der Ansprüche 1 oder 2,
   bei dem für die Übertragung der Datenstrom-Gruppe entlang des gemeinsamen Pfadabschnitts ein Übertragungszyklus vorgegeben wird, der zumindest die minimal erforderliche Übertragungsdauer zuzüglich der ermittelten Jitter umfasst, wobei für jeden aggregierten Datenstrom innerhalb des Übertragungszyklus ein jeweiliges Übertragungszeitfenster vorgegeben wird.

4. Verfahren nach Anspruch 3,
   bei dem durch die Übertragungszeitfenster jeweils Sendezeitpunkte für die aggregierten Datenströme an einem dritten Kommunikationsgerät vorgegeben werden, das als nächstes drittes Kommunikationsgerät mit dem gemeinsamen zweiten Kommunikationsgerät verbunden ist.

5. Verfahren nach einem der Ansprüche 1 bis 4,
   bei dem Sendezeitpunkte für die aggregierten Datenströme an den dritten Kommunikationsgeräten jeweils sukzessive durch einen Sendezeitpunkt an einem entlang des jeweiligen Pfads zum gemeinsamen zweiten Kommunikationsgeräts nachfolgenden dritten Kommunikationsgerät vorgegeben werden und bei dem für eine Ermittlung eines Sendezeitpunkts an einem vorhergehenden dritten Kommunikationsgerät jeweils vom Sendezeitpunkt am nachfolgenden Kommunikationsgerät zumindest eine maximale Latenz entlang einer Übertragungsstecke zwischen dem vorhergehenden und dem nachfolgenden dritten Kommunikationsgerät abgezogen wird.

6. Verfahren nach einem der Ansprüche 1 bis 5,
   bei dem die ersten Kommunikationsgeräte zur Bekanntmachung abonnierbarer Datenströme jeweils einen Datenstrom-Identifikator umfassende erste Datagramme (301-304) senden und in den ersten Datagrammen Dienstgüteparameter für den jeweiligen Datenstrom spezifizieren, bei dem die zweiten Kommunikationsgeräte zur Reservierung von durch die dritten Kommunikationsgeräte für eine Übertragung der Datenströme bereitzustellenden Ressourcen jeweils zweite Datagramme (401-404) senden und in diesen den jeweiligen Datenstrom-Identifikator spezifizieren und bei dem die dritten Kommunikationsgeräte auf die ersten und zweiten Datagramme jeweils bei ausreichender Verfügbarkeit Ressourcen zur Übertragung der Datenströme über den jeweiligen Pfad reservieren.

7. Verfahren nach Anspruch 6,

bei dem das gemeinsame zweite Kommunikationsgerät in den zweiten Datagrammen jeweils die Sendezeitpunkte für die aggregierten Datenströme an zumindest einem dritten Kommunikationsgerät spezifiziert, das als nächstes drittes Kommunikationsgerät mit gemeinsamen zweiten Kommunikationsgerät verbunden ist.

8.  Verfahren nach Anspruch 7,
    bei dem die zweiten Datagramme des gemeinsamen zweiten Kommunikationsgeräts über die dritten Kommunikationsgeräte entlang der jeweiligen Pfade zu den ersten Kommunikationsgeräten weitergeleitet werden und bei dem in den weitergeleiteten zweiten Datagrammen des gemeinsamen zweiten Kommunikationsgeräts jeweils ein Sendezeitpunkt an einem entlang des jeweiligen Pfads zum gemeinsamen zweiten Kommunikationsgerät vorangehenden dritten Kommunikationsgerät oder ein Sendezeitpunkt am jeweiligen ersten Kommunikationsgerät spezifiziert wird.

9.  Verfahren nach einem der Ansprüche 6 bis 8,
    bei dem die minimalen und die maximalen Latenzen bei der Übertragung vom jeweiligen ersten Kommunikationsgerät zum gemeinsamen zweiten Kommunikationsgerät anhand von Laufzeiten der ersten und/oder zweiten Datagramme ermittelt werden.

10. Verfahren nach einem der Ansprüche 6 bis 9,
    bei dem die ersten Datagramme Talker Advertise oder Talker Announce Nachrichten sind und bei dem die zweiten Datagramme Listener Ready, Listener Join oder Listener Attach Nachrichten sind.

11. Verfahren nach einem der Ansprüche 6 bis 10,
    bei dem die durch die dritten Kommunikationsgeräte bereitzustellenden Ressourcen nutzbare Übertragungszeitfenster, Übertragungsrate, Datenmenge, zugesicherte maximale Latenz, Queue-Anzahl, Queue-Cache und/oder Adress-Cache in Switchen oder Bridges umfassen.

12. Verfahren nach einem der Ansprüche 6 bis 11,
    bei dem die dritten Kommunikationsgeräte innerhalb eines Time-sensitive Network, insbesondere entsprechend IEEE802.3-2018, IEEE 802.1Q-2018, IEEE 802.1AB-2016, IEEE 802.1AS-2011, IEEE 802.1BA-2011 und/oder IEEE 802.1CB-2017, miteinander verbunden sind.

13. Verfahren nach Anspruch 12,
    bei dem eine Weiterleitung der von den Datenströmen umfassten Datagramme mittels Frame Preemption, insbesondere gemäß IEEE 802.1Q-2018, Time-Aware Shaper, insbesondere gemäß IEEE 802.1Q-2018, Credit-Based Shaper, insbesondere gemäß IEEE 802.1Q-2018, Burst Limiting Shaper, Peristaltic Shaper und/oder Priority-Based Shaper gesteuert wird.

14. Verfahren nach einem der Ansprüche 1 bis 13,
    bei dem die ausgewählten Datagramme (300) von den ersten Kommunikationsgeräten (201-204) über die dritten Kommunikationsgeräte (101-104) zu den zweiten Kommunikationsgeräten (205) innerhalb vorgegebener periodischer Zeitintervalle übertragen werden und bei dem die vorgegebenen Zeitintervalle an allen Kommunikationsgeräten (101-104, 201-205) synchronisiert werden.

15. Kommunikationsgerät zur Übertragung zeitkritischer Daten innerhalb eines Kommunikationssystems, insbesondere zur Durchführung eines Verfahrens nach einem der vorangehenden Ansprüche, wobei das Kommunikationsgerät dafür ausgestaltet und eingerichtet ist,

    - am Kommunikationsgerät endende Datenströme entlang eines gemeinsamen Pfadabschnitts innerhalb einer Datenstrom-Gruppe zu aggregieren,
    - für jeden innerhalb der Datenstrom-Gruppe aggregiert Datenstrom eine minimale und eine maximale Latenz bei einer Übertragung von einem jeweiligen Quell-Kommunikationsgerät zum Kommunikationsgerät zu ermitteln,
    - aus den minimalen und den maximalen Latenzen für die aggregierten Datenströme jeweils einen Jitter zu ermitteln
    - anhand einer für die Datenstrom-Gruppe minimal erforderlichen Übertragungsdauer entlang des gemeinsamen Pfads sowie anhand der Jitter jeweils Sendezeitpunkte für die aggregierten Datenströme vorzugeben, wobei die minimal erforderliche Übertragungsdauer aus Übertragungsraten- und Datenmengenanforderungen der aggregierten Datenströme berechnet ist.

FIG 1

| | Bursts | MIN | MAX | Jitter |
|---|---|---|---|---|
| T1 | 2 | 15 | 250 | 235 |
| T2 | 1 | 15 | 250 | 235 |
| T3 | 1 | 20 | 200 | 180 |
| T4 | 2 | 15 | 150 | 135 |

EP 4 050 856 A1

FIG 2

Table 610:
| | Burst | Start |
|---|---|---|
| T1 | 1 | 1240 |
| T1 | 2 | 640 |

T1 — 201
ST1 — 501

Table 620:
| | Burst | Start |
|---|---|---|
| T2 | 1 | 394 |

T2 — 202
ST2 — 502

Table 630:
| | Burst | Start |
|---|---|---|
| T3 | 1 | 1038 |

T3 — 203
ST3 — 503

Table 640:
| | Burst | Start |
|---|---|---|
| T4 | 1 | 237 |
| T4 | 2 | 892 |

T4 — 204
ST4 — 504

Table 510:
| | Burst | Start |
|---|---|---|
| T1 | 1 | 1245 |
| T2 | 1 | 394 |
| T1 | 2 | 645 |

101

Table 520:
| | Burst | Start |
|---|---|---|
| T3 | 1 | 1043 |

102
ST3 — 503

Table 530:
| | Burst | Start |
|---|---|---|
| T4 | 1 | 242 |
| T4 | 2 | 897 |
| T3 | 1 | 1048 |

103
ST3 — 503
ST4 — 504

Table 500:
| | Burst | Start |
|---|---|---|
| T1 | 1 | 0 |
| T4 | 1 | 252 |
| T2 | 1 | 404 |
| T1 | 2 | 655 |
| T4 | 2 | 907 |
| T3 | 1 | 1058 |

L — 205

104
ST1 — 501 502 503 504

Table 540:
| | Burst | Start |
|---|---|---|
| T1 | 1 | 1250 |
| T4 | 1 | 247 |
| T2 | 1 | 399 |
| T1 | 2 | 650 |
| T4 | 2 | 902 |
| T3 | 1 | 1053 |

ST1 — 501 502

11

**Europäisches Patentamt**
**European Patent Office**
**Office européen des brevets**

# EUROPÄISCHER RECHERCHENBERICHT

**Nummer der Anmeldung**

EP 21 15 9342

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 3 668 051 A1 (SIEMENS AG [DE]) 17. Juni 2020 (2020-06-17) * Absätze [0004], [0014], [0018], [0019], [0025], [0028], [0040], [0047], [0048], [0055] * * Absätze [0099] - [0100]; Abbildungen 1,11,12 * ----- | 1-15 | INV. H04L12/841 H04L12/891 H04L12/913 H04L12/911 |
| Y | FENG CHEN ET AL: "Support for Stream Aggregation in RAP (ver 0.3)", IEEE DRAFT; DD-CHEN-FLOW-AGGREGATION-0119-V03, IEEE-SA, PISCATAWAY, NJ USA , Bd. 802.1, Nr. v03 17. Januar 2019 (2019-01-17), Seiten 1-19, XP068133893, Gefunden im Internet: URL:grouper.ieee.org/groups/802/1/files/pu blic/docs2019/dd-chen-flow-aggregation-011 9-v03.pdf [gefunden am 2019-01-17] * Seite 3 - Seite 7 * * Seite 13 - Seite 17 * ----- | 1-15 | |

**RECHERCHIERTE SACHGEBIETE (IPC)**

H04L

Der vorliegende Recherchenbericht wurde für alle Patentansprüche erstellt

| Recherchenort | Abschlußdatum der Recherche | Prüfer |
|---|---|---|
| Den Haag | 24. August 2021 | Kesting, Christiane |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 15 9342

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-08-2021

| Im Recherchenbericht angeführtes Patentdokument | Datum der Veröffentlichung | Mitglied(er) der Patentfamilie | Datum der Veröffentlichung |
|---|---|---|---|
| EP 3668051 A1 | 17-06-2020 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3038325 B1
- EP 3674824 A1